# EUROPEAN PATENT APPLICATION

(11) **EP 4 796 816 A1**
(43) Date of publication of application: **26.08.2026**
(21) Application number: 24879004.0
(22) Date of filing: 15.10.2024
(51) Int. Cl.: F16K 11/065

(54) **SLIDING BLOCK ASSEMBLY AND REVERSING VALVE**

(30) Priority: 19.10.2023 CN 202322815403 U; 18.12.2023 CN 202323456216 U
(71) Applicant: Zhejiang Dunan Artificial Environment Co., Ltd., Shaoxing Zhejiang 311835 (CN)
(72) Inventor: XUAN, Qijie, Zhejiang 311835 (CN); ZHU, Jiafeng, Zhejiang 311835 (CN); SUN, Junjie, Zhejiang 311835 (CN)
(74) Representative: Meyer-Dulheuer MD Legal Patentanwälte PartG mbB
(86) International application number: PCT/CN2024/124999
(87) International publication number: WO 2025/082361

(57) **Abstract**

The present disclosure provides a sliding block assembly (100) and a reserving valve. The sliding block assembly (100) includes a sliding block (10), a supporting structure (20) and a restricting protrusion (30). The sliding block (10) is provided with a circulation cavity. An end of the circulation cavity is provided with an opening. A part of an inner wall of the circulation cavity is recessed along a width direction of the sliding block (30) to form a first snapping groove (12) at the opening. The restricting protrusion (30) is connected to an end of the first snapping groove (12) adjacent to the opening (111). The restricting protrusion (30) surrounds with a groove wall of the first snapping groove (12) to form a restricting groove (13). The supporting structure (20) includes a supporting member (21), and the supporting member (21) extends into the circulation cavity via the opening.

## Description

### CROSS-REFERENCE TO RELATED APPLICATIONS

This application claims priority to Chinese patent application No. 202322815403.9, filed on October 19, 2023, and titled "SLIDING BLOCK ASSEMBLY AND REVERSING VALVE" and No. 202323456216.2, filed on December 18, 2023, and titled "SLIDING BLOCK ASSEMBLY AND REVERSING VALVE". The contents of the above identified applications are hereby incorporated herein in their entireties by reference.

### TECHNICAL FIELD

The present disclosure relates to the field of valve technology, and in particular, to a sliding block assembly and a reserving valve.

### BACKGROUND

In an air conditioning system, a reversing valve changes a flow direction of refrigerant by sliding a sliding block inside the reserving valve, thereby switching between a cooling mode and a heating mode of the air conditioning system.

In the related art, the sliding block includes a sliding block body and a support pin. The sliding block body is provided with a circulation cavity. An end of the circulation cavity is provided with an opening. The support pin is accommodated in the circulation cavity via the opening and is connected to the sliding block body, so as to improve strength of the sliding block and reduce probability of deformation of the sliding block. However, when the air conditioning system is in operation, due to an influence of pressure difference or vibration, the support pin may be separated from the sliding block body, resulting in defects such as deformation and damage of the sliding block, and affecting a normal operation of the reversing valve.

### SUMMARY

According to various embodiments of the present disclosure, a sliding block assembly and a reversing valve are provided.

Based on this, it is necessary to provide a sliding block assembly and a reversing valve to solve a problem that an internal support pin is prone to be separated from the sliding block when the sliding block in the art is in operation.

The present disclosure provides the sliding block assembly. The sliding block assembly includes a sliding block, a supporting structure and a restricting protrusion. The sliding block is provided with a circulation cavity. An end of the circulation cavity is provided with an opening. A part of an inner wall of the circulation cavity is recessed along a width direction of the sliding block to form a first snapping groove at the opening. The restricting protrusion is connected to an end of an assembly groove adjacent to the opening. The restricting protrusion extends along a length direction of the sliding block and surrounds with a groove wall of the assembly groove to form a restricting groove. The supporting structure includes a supporting member. The supporting member extends into the circulation cavity via the opening. A side surface of the supporting member is configured to be in stopping engagement with the restricting protrusion, such that an end of the supporting member is snapped into the restricting groove to prevent the supporting member from moving linearly along a height direction of the sliding block or rotating relative to the length direction of the sliding block.

In an embodiment, an end of the restricting protrusion away from the opening is provided with a restricting surface configured to be in stopping engagement with the supporting member. The restricting surface is perpendicular to the height direction of the sliding block.

By such arrangement, the supporting member can play a better stopping role.

In an embodiment, a cross-sectionof the restricting surface is in a straight-line shape, an arc shape, or a polygonal shape.

By such arrangement, a structure of the restricting surface is simple and is easy to process, resulting in reducing the processing cost of the restricting protrusion.

In an embodiment, a side surface of the supporting member is in contact with the restricting surface.

By such arrangement, a connection performance between the supporting member and the restricting surface increase.

In an embodiment, the number of the restricting protrusion is multiple. A plurality of restricting protrusions are disposed in the assembly groove at intervals. Restricting surfaces of the plurality of restricting protrusions are in flush with each other.

By such arrangement, restricting reliability of the restricting protrusion for the supporting member can be improved.

In an embodiment, two ends of the restricting protrusion extend to the groove wall of the assembly groove along the length direction of the sliding block and are connected to the groove wall of the assembly groove.

By such arrangement, restricting reliability of the supporting member is effectively improved.

In an embodiment, a portion of a groove wall of the assembly groove away from the opening is recessed along the width direction of the sliding block to form the restricting groove. The restricting protrusion is formed by a portion of the groove wall of the assembly groove adjacent to the opening.

By such arrangement, the restricting groove is more easy to be molded.

In an embodiment, an end of the restricting protrusion adjacent to the opening is provided with a guiding surface.

By such arrangement, assembly efficiency of the supporting member is effectively improved.

In an embodiment, a shape of the supporting member matches with a shape of the restricting groove. The supporting member is in interference fit with the restricting groove. Alternatively, the supporting member includes a supporting column and an adapter plate. An end of the supporting column is connected to the adapter plate. The adapter plate is accommodated in the restricting groove and is in interference fit with the restricting groove.

By such arrangement, the supporting member can be firmly mounted on the sliding block.

In an embodiment, the supporting structure further includes a restricting column. Both ends of the circulation cavity are provided with a second snapping groove extending along a second preset direction. The both ends of the circulation cavity are opposite to each other along the first preset direction. The second snapping groove is in communication with the circulation cavity via the first snapping groove. The number of the restricting column is the same as that of the second snapping groove. The restricting column is disposed on both ends of the supporting member. Along the second preset direction, the both ends of the supporting member are configured to be snapped into the corresponding first snapping groove via the opening, respectively, and the restricting column is configured be snapped into the corresponding second snapping groove via the opening. After the restricting column is snapped with the second snapping groove, an end of the restricting column away from the supporting member is configured to abut against a groove wall of the second snapping groove along the first preset direction. An angle is defined between the first preset direction and the second preset direction

In an embodiment, the second snapping groove includes a second assembling groove and a second sliding groove. The second assembling groove is in communication with the second sliding groove. Along the second preset direction, a cross-sectional area of the second sliding groove is less than that of the second assembling groove. The restricting column is snapped into the first assembling groove via the second sliding groove

By such arrangement, the restricting column can be prevented from being separated from the second assembling groove.

In an embodiment, an end of the restricting column away from the supporting member is provided with a protrusion portion. The protrusion portion is configured to abut against the groove wall of the second snapping groove in the first preset direction along with the supporting member being snapped into the first snapping groove.

By such arrangement, connecting strength between the restricting column and the sliding block is greatly improved.

In an embodiment, the protrusion portion is in a conical shape or a hemispherical shape.

By such arrangement, the protrusion portion is easy to be processed, and processing efficiency of the protrusion portion is improved.

In an embodiment, two restricting columns disposed at two opposite ends of the supporting member are defined as a column group. The number of the column group is multiple. A plurality of column groups are spaced from each other and disposed on the supporting member. Two first snapping grooves disposed at two opposite ends of the circulation cavity are defined as a groove group. The number of the groove group is the same as that of the column group.

By such arrangement, connecting strength between the supporting member and the sliding block can be further improved.

In an embodiment, the supporting member is provided with an assembling hole. One end of the restricting column is inserted into the assembling hole and fixed to the assembling hole. An other end of the restricting column protrudes from an end surface of the supporting member.

By such arrangement, processing difficulty of the sliding block assembly can be greatly reduced.

In an embodiment, the first snapping groove includes a first assembling groove and a first sliding groove. The first assembling groove is in communication with the first sliding groove. Along the second preset direction, a cross-sectional area of the first sliding groove is less than that of the first assembling groove. An end of the supporting member is snapped into the first assembling groove via the first sliding groove.

By such arrangement, the supporting member can be prevented from detaching from the first assembling groove.

In an embodiment, a cross-sectional area of the restricting protrusion increases along the second preset direction. Alternatively, the restricting protrusion includes a restricting surface forming an angle with a side wall surface of the first sliding groove. Alternatively, the restricting surface is flat or curved.

By such arrangement, the supporting member can be prevented from being separated from the first assembling groove.

In an embodiment, the restricting column is in a cylindrical shape or a polygonal shape.

By such arrangement, process efficiency of the restricting column can be improved.

The present disclosure further provides a reversing valve including the sliding block assembly according to any one of the above embodiments.

Details of one or more embodiments of this disclosure are presented in the attached drawings and descriptions below. And other features, purposes and advantages of this disclosure will become apparent from the description, drawings and claims.

### BRIEF DESCRIPTION OF THE DRAWINGS

In order to illustrate the embodiments of the present disclosure more clearly, the drawings used in the embodiments will be described briefly. Apparently, the following described drawings are merely for the embodiments of the present disclosure, and other drawings can be derived by those of ordinary skill in the art without any creative effort.
FIG. 1 is a schematic diagram of a sliding block assembly in an embodiment of the present disclosure.
FIG. 2 is a cross-sectional view of a sliding block in an embodiment of the present disclosure.
FIG. 3 is a cross-sectional view of a sliding block assembly in an embodiment of the present disclosure.
FIG. 4 is a schematic diagram of a support member in an embodiment of the present disclosure.
FIG. 5 is an enlarged view of portion A in FIG. 3.
FIG. 6 is a cross-sectional view of a sliding block in an embodiment of the present disclosure.
FIG. 7 is a cross-sectional view of a sliding block assembly in an embodiment of the present disclosure.
FIG. 8 is a schematic diagram of a support member in an embodiment of the present disclosure.
FIG. 9 is a cross-sectional view of a sliding block in an embodiment of the present disclosure.
FIG. 10 is a cross-sectional view of a sliding block assembly in an embodiment of the present disclosure.
FIG. 11 is a schematic diagram of a supporting member in an embodiment of the present disclosure.
FIG. 12 is a first schematic diagram of a sliding block assembly in an embodiment of the present disclosure.
FIG. 13 is a second schematic diagram of a sliding block assembly in an embodiment of the present disclosure.
FIG. 14 is a bottom view of a sliding block assembly in an embodiment of the present disclosure.
FIG. 15 is a cross-sectional schematic view of the sliding block assembly along A-A line in FIG. 14.
FIG. 16 is a cross-sectional schematic view of the sliding block assembly along B-B line in FIG. 14.
FIG. 17 is an enlarged view of a second snapping groove in an embodiment of the present disclosure.
FIG. 18 is an enlarged view of a second snapping groove in an embodiment of the present disclosure.
FIG. 19 is an exploded view of a supporting structure in an embodiment of the present disclosure.
FIG. 20 is a schematic diagram of a restricting column in an embodiment of the present disclosure.
FIG. 21 is a schematic diagram of a restricting column in an embodiment of the present disclosure.

Reference signs are as follows: 100 represents a sliding block assembly; 10 represents a sliding block; 11 represents a circulation cavity; 111 represents an opening; 12 represents a first snapping groove; 13 represents a restricting groove; 20 represents a supporting structure; 21 represents a supporting member; 211 represents a supporting column; 212 represents an adapter plate; 30 represents a restricting protrusion; 31 represents a restricting surface; 32 represents a guiding surface; 121 represents a first assembling groove; 122 represents a first sliding groove; 13 represents a second snapping groove; 131 represents a second assembling groove; 132 represents a second sliding groove; 14 represents a base; 141 represents a cutting surface; 15 represents a step portion; 16 represents a body portion; 17 represents a reinforcing structure; 213 represents an assembling hole; 22 represents a restricting column; and 221 represents a protrusion portion.

### DETAILED DESCRIPTION

In order to make above objectives, features, and advantages of the present disclosure more obvious and understandable, a detailed explanation of the specific implementation of the present disclosure will be provided below in combination with drawings. Many specific details are elaborated in following description to facilitate a thorough understanding of the present disclosure. However, the present disclosure can be implemented in many other ways different from those described herein. Those skilled in the art can make similar improvements without departing from a spirit of the present disclosure. Therefore, the present disclosure is not limited by specific embodiments disclosed below

It should be noted that, when a member is considered "fixed to" or "set on" another member, it can be directly fixed to another member or there may be a centered member present simultaneously. When a member is considered "connected to" another member, it can be directly set on another member or there may be a centered member present simultaneously. The terms "vertical", "horizontal", "up", "down", "left", "right" and similar expressions used in the specification of the present disclosure are for illustrative purposes only and do not represent the only implementation method.

In addition, the terms "first" and "second" are only used to describe the purpose and can not be understood as indicating or implying relative importance or implying the quantity of indicated technical features. Therefore, the features limited to "first" and "second" can explicitly or implicitly include at least one of these features. In the description of the present disclosure, "multiple" means at least two, such as two, three, and so on, unless there is an otherwise specific limitation.

In the present disclosure, unless there is the otherwise specifications and limitations, the first feature is "above" or "below" the second feature which may be a direct contact between the first and second features, or the first features and the second features may be in indirect contact through an intermediate medium. Moreover, the first feature is "on", "above", and "over" the second feature can be that the first feature is directly or diagonally above the second feature, or only indicates that the first feature is horizontally higher than the second feature. The first feature is "beneath", "below", and "under" the second feature can be that the first feature is directly or diagonally below the second feature, or only indicate that the horizontal height of the first feature is less than that of the second feature.

Unless otherwise defined, all technical and scientific terms used in this article have the same meanings as those commonly understood by those skilled in the art of the present disclosure. The terms used in the specification of the present disclosure are only for the purpose of describing specific embodiments and are not intended to limit the present disclosure. The term "and/or" used in this article includes any and all combinations of one or more related listed items

In the air conditioning system, the reversing valve changes a circulation direction of the refrigerant by sliding the internal sliding block, thereby switching between a cooling mode and a heating mode of the air conditioning system.

The sliding block in the related art includes a sliding block body and a support pin. The sliding block body is provided with a circulation cavity. An end of the circulation cavity is provided with an opening. The support pin is accommodated in the circulation cavity via the opening and is connected to the sliding block body, so as to improve strength of the sliding block and reduce probability of deformation of the sliding block. However, when the air conditioning system is in operation, due to an influence of pressure difference or vibration, the support pin may be separated from the sliding block body, resulting in defects such as deformation and damage of the sliding block, which affects normal operation of the reversing valve.

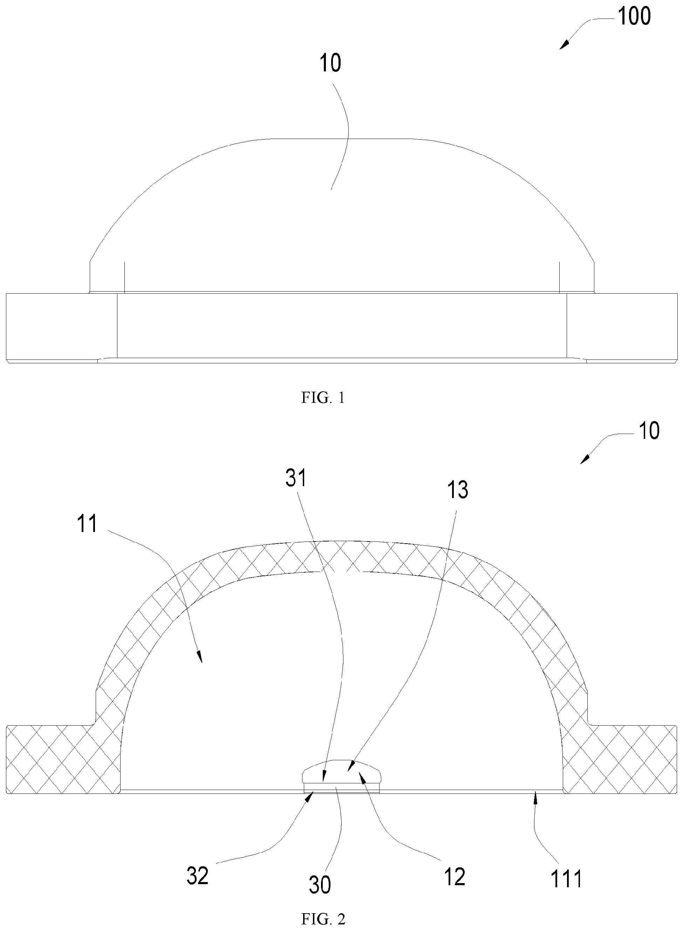

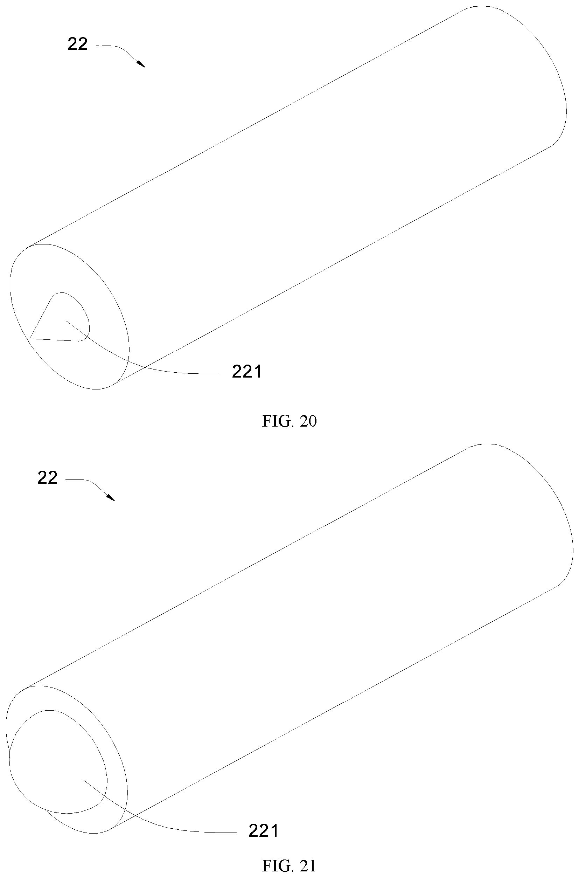

Referring to FIGs. 1 to 21, the present disclosure provides a sliding block assembly 100. The sliding block assembly 100 is applied to the reversing valve, and is configured to be in communication with different valve ports on the reversing valve to switch the circulation direction of the refrigerant, thereby controlling the heating mode or the cooling mode of the air conditioning system.

The sliding block assembly 100 includes a sliding block 10, a supporting structure 20, and a restricting protrusion 30. The sliding block 10 is provided with a circulation cavity 11. An end of the circulation cavity is provided with an opening 111. A part of an inner wall of the circulation cavity 11 is recessed along a width direction of the sliding block 10 to form a first snapping groove 12. That is, the first snapping groove 12 in the present disclosure is directly processed on the inner wall of the circulation cavity 11, such that a structure of the first snapping groove is simple, resulting in improving processing efficiency and reducing a process cost.

Furthermore, the restricting protrusion 30 is connected to an end of the first snapping groove 12 adjacent to the opening 111. The restricting protrusion 30 extends along a length direction of the sliding block 10 and surrounds with a groove wall of the first snapping groove 12 to form a restricting groove 13. The supporting structure includes a supporting member 21. The supporting member 21 extends into the circulation cavity 11 via the opening 111. A side surface of the supporting member 21 can be in stopping engagement with the restricting protrusion 30, such that an end of the supporting member 21 can be snapped in the restricting groove 13 to prevent the supporting member 21 from moving linearly along the height direction of the sliding block 10 or rotating relative to the length direction of the sliding block 10.

When the end of the supporting member 21 is disposed in the first snapping groove 12, the supporting member 21 may slide or deflect as a whole along the height direction of the sliding block 10 under a force, which may affect the supporting member 21 for supporting the sliding block 10 and reduce support reliability of the supporting member 21.

In the present disclosure, the restricting protrusion 30 is disposed in the first snapping groove 12. The restricting protrusion 30 can restrict motion of the supporting member 21 along the height direction of the sliding block 10, i.e., an end of the supporting member 21 can be firmly restricted in the restricting groove 13, such that the supporting member 21 can be stably connected to the sliding block 10 under different working conditions, so as to prevent the supporting member 21 from being separated from the sliding block 10. By such arrangement, connection reliability of the supporting member 21 is greatly improved, resulting in effectively ensuring a reinforcing effect of the supporting member 21 on the sliding block 10, avoiding defects such as deformation and damage of the sliding block 10 under pressure, and further greatly improving reliability of the reversing valve when the reversing valve is in operation.

The number of the first snapping groove 12 is two. The two first snapping grooves 12 are disposed on two opposite sides of the circulation cavity 11 along the width direction of the sliding block 10 to correspond to two ends of the supporting member 21, respectively, such that the two first snapping grooves 12 can be connected to the two ends of the supporting member 21 more stable and reliable.

In an embodiment, as shown in FIGs. 2, 6 and 9, an end of the restricting protrusion 30 away from the opening 111 is provided with a restricting surface 31 configured to be in stopping engagement with the supporting member 21. The restricting surface 31 is perpendicular to the height direction of the sliding block 10.

The supporting member 21 can be better stopped by the restricting surface 31 perpendicular to the height direction of the sliding block 10, such that the supporting member 21 can be prevented from moving relative to the restricting surface 31 along the height direction of the sliding block 10, resulting in preventing the supporting member 21 from being separated from the sliding block 21.

In order to improve a connection performance between the supporting member 21 and the restricting surface 31, in an embodiment, the side surface of the supporting member 21 is in contact with the restricting surface 31. That is, the shape of the restricting surface 31 matches with that of the side surface of the supporting member 21, so as to ensure that the supporting member 21 can be in tight contact with the restricting surface 31.

In an embodiment, a cross-sectional view of the restricting surface 31 is in a straight-line shape, an arc shape, or a broken-line shape. By such arrangement, a structure of the restricting surface is simple, such that the restricting surface is easy to process and can reduce a processing cost of the restricting protrusion 30. Alternatively, a cross-sectional view of the restricting surface 31 may be a combination of an arc shape, a straight line shape, or other shapes. The cross-sectional view of the restricting surface 31 may be properly processed based on a shape of the supporting member 21.

When the cross-sectional view of the restricting surface 31 is in the straight-line shape, the number of the restricting protrusion 30 may be set as required, and the number of the restricting protrusion 30 is set to one, two or more.

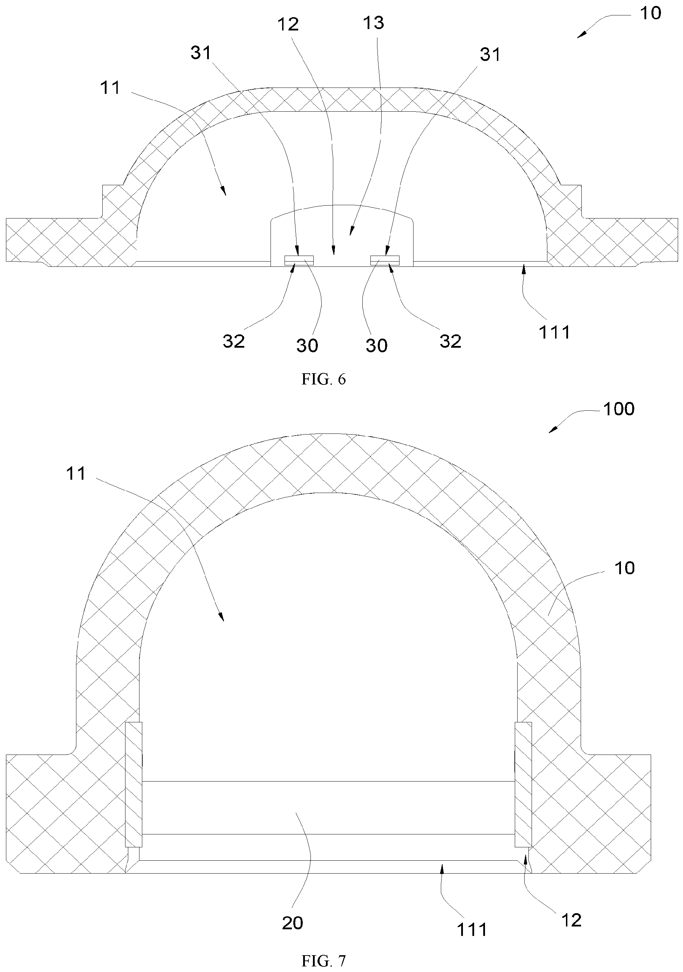

In an embodiment of the present disclosure, as shown in FIG. 6 to FIG. 8, the number of the restricting protrusion 30 is multiple, and a plurality of restricting protrusions 30 are disposed in the first snapping groove 12 at intervals. Restricting surfaces of the plurality of restricting protrusions are in flush with each other. By such arrangement, reliability of restricting the supporting member 21 by the restricting protrusion 30 is further improved.

When the cross-section of the restricting surface 31 is in an arc shape, a polygonal shape or a complex shape, to reduce processing difficulty and better match with the shape of the supporting member 21, only one restricting protrusion 30 is preferably provided.

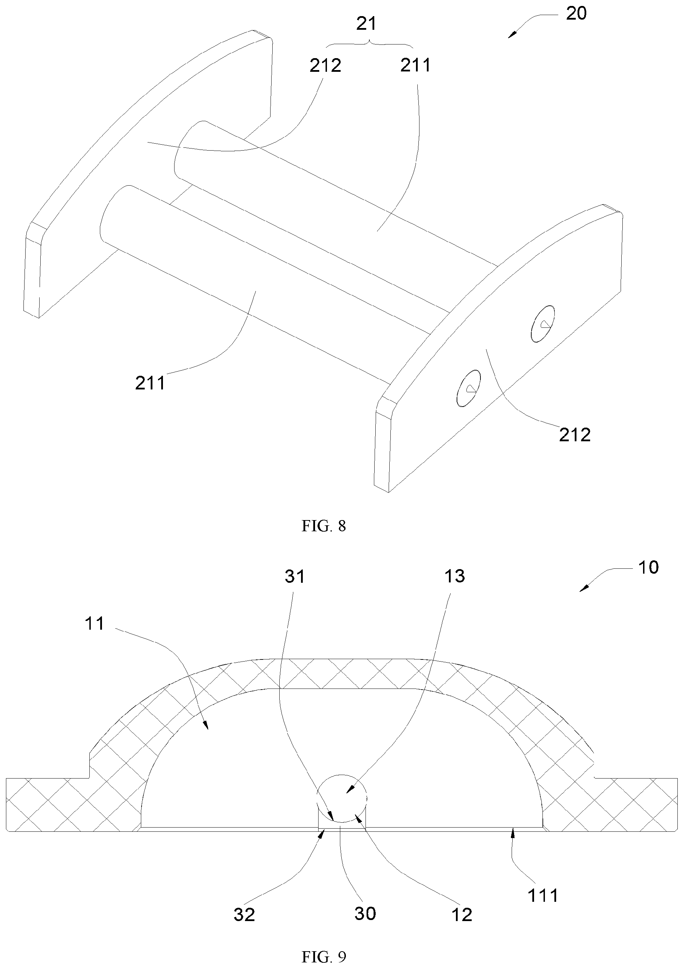

Furthermore, in order to ensure a stopping effect of the restricting protrusion 30 on the supporting member 21, in an embodiment, as shown in FIGs. 9 to 11, two ends of the restricting protrusion 30 extend to the groove wall of the first snapping groove 12 along the length direction of the sliding block 10 and are connected to the groove wall of the first snapping groove 12. By such arrangement, a side surface of the supporting member 21 adjacent to the opening 111 can be stopped by the restricting surface 31, thereby effectively improving restricting reliability of the supporting member 21.

As shown in FIGs. 2 to 5, when the cross-sectional view of the restricting surface 31 is in a straight-line shape, the restricting surface 31 may extend to the groove wall of the first snapping groove 12 along the length direction of the sliding block 10 and be connected to the groove wall of the first snapping groove 12.

The restricting protrusion 30 and the sliding block 10 may be an integral structure, so as to improve connection strength between the restricting protrusion 30 and the sliding block 10, and further ensure restriction reliability of the supporting member 21 by the restricting protrusion 30.

In another embodiment, a portion of the groove wall of the first snapping groove 12 away from the opening 111 is recessed along the width direction of the sliding block 10 to form the restricting groove 13. The restricting protrusion 30 is formed by a part of the groove wall of the first snapping groove 12 adjacent to the opening 111.

That is, the restricting groove 13 in the present embodiment can be directly formed on the groove wall of the first snapping groove 12, facilitating improving processing efficiency of the restricting groove 13 and forming the restricting groove 13.

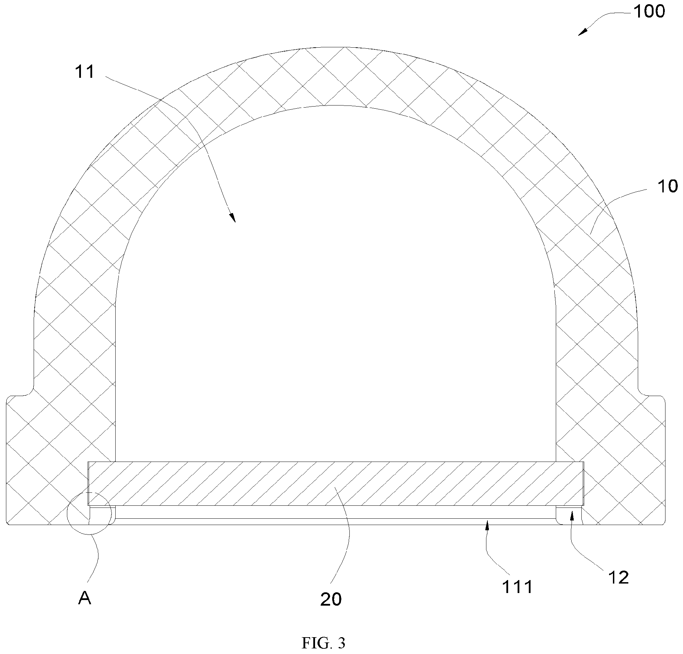

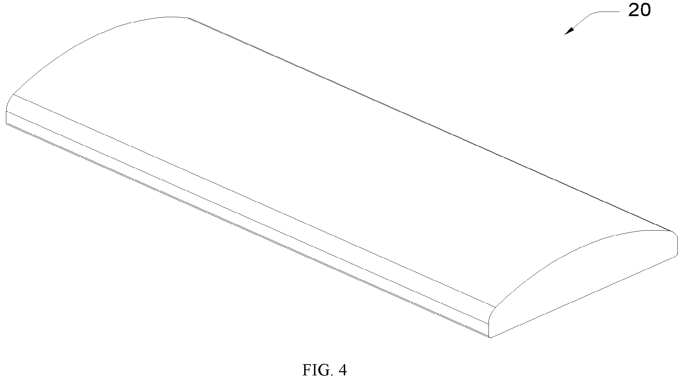

In order to further improve connection stability of the supporting member 21 in the first snapping groove 12, in an embodiment, as shown in FIGs. 3 and 4, the shape of the supporting member 21 matches with the shape of the restricting groove 13, and the supporting member 21 is in interference fit with the restricting groove 13, such that the supporting member 21 is firmly mounted on the sliding block, resulting in improving reliability of the whole sliding block assembly.

In other embodiments, as shown in FIGs. 7, 8, 10, and 11, the supporting member 21 includes a supporting column 211 and an adapter plate 212. An end of the supporting column 211 is connected to the adapter plate 212, and the adapter plate 212 is accommodated in and in interference fit with the restricting groove 13. By such arrangement, the supporting member 21 can be firmly mounted on the sliding block 10, and the adapter plate 212 can be processed to better match with the shape of the restricting groove 13, thereby reducing processing difficulty of the supporting member 21. Therefore, a volume of the supporting column 211 in the supporting member 21 can be reduced, thereby greatly reducing material costs.

Connection manners between the supporting column 211 and the adapter plate 212 may be snapping, welding, interference, and so on, which is not limited herein. In addition, an appropriate quantity of supporting columns 211 may be selected as required, so as to further improve support strength of the supporting member 21.

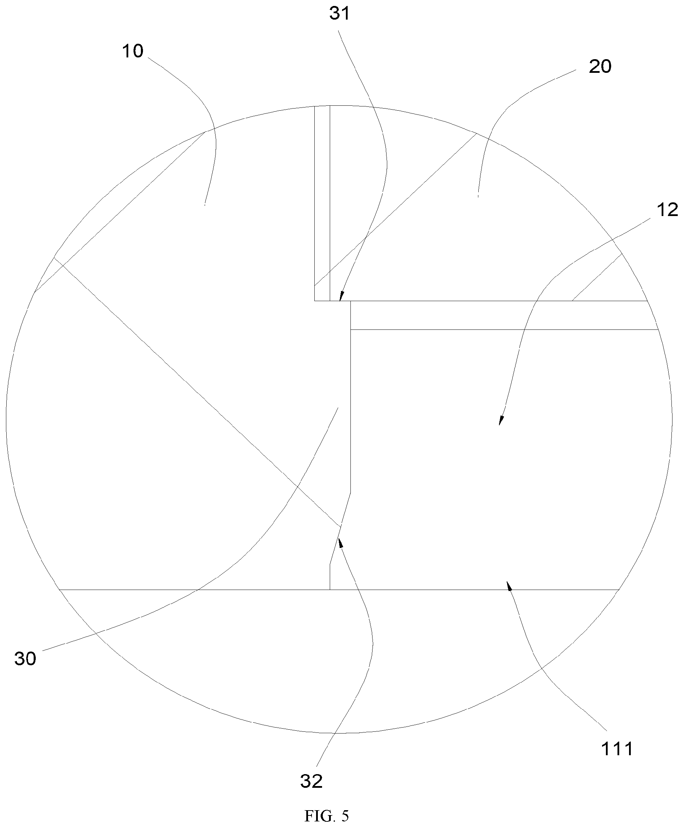

The supporting member 21 is assembled along the height direction of the sliding block 10, and in order to reduce assembly difficulty of the supporting member 21 in the present disclosure, in an embodiment, as shown in FIG. 5, an end of the restricting protrusion 30 adjacent to the opening 111 is provided with a guiding surface 32. By a guiding effect of the guiding surface 32, it facilitates the supporting member 21 moving into the restricting groove 13 smoothly, thereby effectively improving the assembly efficiency of the supporting member 21. In addition, wear of the restricting protrusion 30 or the supporting member 21 can be reduced, and a service life of the sliding block assembly 100 can be prolonged.

The guiding surface 32 may be flat or curved, and a size of the guiding surface 32 is not limited in the present disclosure, as long as the guiding surface 32 can play a guiding role.

The present disclosure further provides a reversing valve. The reversing valve includes the sliding block assembly 100 described in any one of the above embodiments.

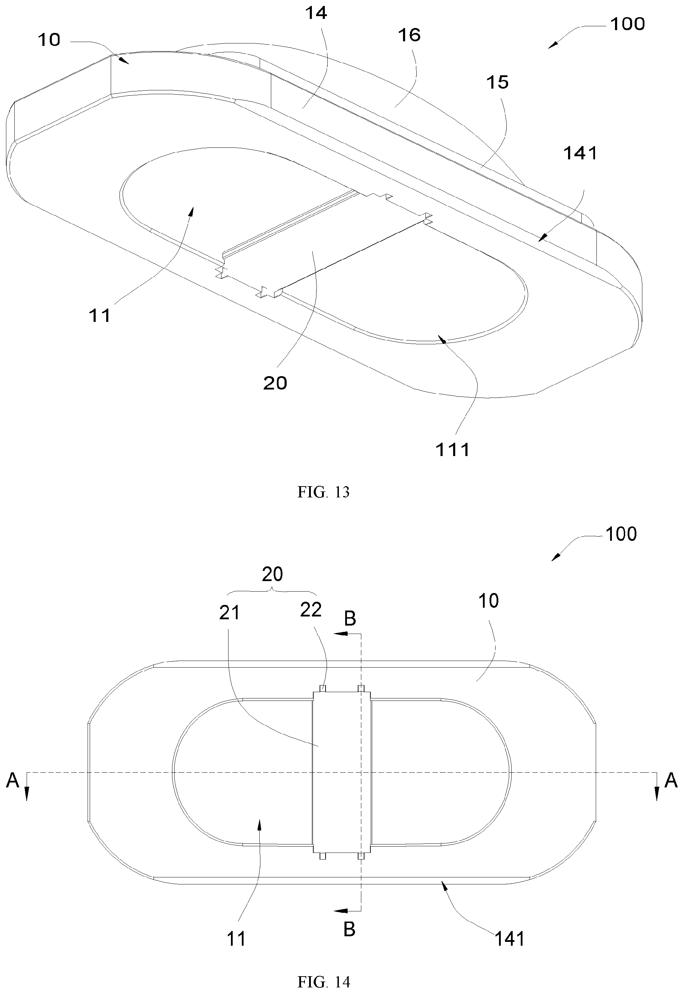

Referring to FIG. 13 and FIG. 14, in some embodiments, the sliding block 10 is in a bowl shape. As the sliding block 10 slides in the reversing valve, the circulation cavity 11 of the sliding block 10 can be in communication with different pipelines, thereby switching flow paths of the reversing valve. The supporting structure 20 is mounted in the circulation cavity 11 via the opening 111 and connected to the sliding block 10, so as to support the sliding block 10 and improve the strength of the sliding block 10.

In some embodiments, as shown in FIG. 13 to FIG. 18, the supporting structure 20 includes a supporting member 21 and a restricting column 22. At the opening 111, two opposite end wall surface of the circulation cavity 11 is provided with a first snapping groove 12 and a second snapping groove 13 extending in a second preset direction along the first preset direction. The first snapping groove 12 is in communication with the circulation cavity 11 via the second snapping groove 13. The second preset direction is defined as an inner wall of the circulation cavity extending along the width direction of the sliding block. The number of the restricting column 22 is the same as that of the second snapping groove 13, and two ends of the supporting member 21 are provided with two restricting columns 22, respectively. Along the second preset direction, both ends of the supporting member 21 can be snapped into the corresponding first snapping groove 12 via the opening 111, respectively. The two restricting column 22 can be snapped into the corresponding second snapping groove 13 via the opening 111, respectively. After the restricting column 22 is snapped with the second snapping groove 13, along the first preset direction, an end of the restricting column 22 away from the supporting member 21 abuts against the groove wall of the second snapping groove 13. An angle is defined between the first preset direction and the second preset direction.

The first preset direction may be a width direction of the sliding block 10, i.e., a length direction of the supporting member 21, and the second preset direction is the height direction of the sliding block 10.

In the present disclosure, the first snapping groove 12 is in snapping fit with the supporting member 21, the first snapping groove 12 can restrict motion of the supporting member 21 along the height direction of the sliding block 10, and even if the sliding block 10 is expanded due to a pressure difference, both ends of the supporting member 21 can still be connected to the sliding block 10, so as to prevent the supporting member 21 from being separated from the sliding block 10. Furthermore, the two ends of the supporting member 21 are provided with the two restricting columns 22, respectively. The groove wall of the first snapping groove 12 is correspondingly provided with the second snapping groove 13 in fit with the corresponding restricting column 22, such that motion of the supporting member 21 along the height direction of the sliding block 10 can be restricted by fitting the restricting column 22 with the second snapping groove 13 in a snapping manner, thereby further improving connection firmness of the supporting member 21 and the sliding block 10, and greatly improving the reliability of the sliding block assembly 100 when the sliding block assembly 100 is in operation.

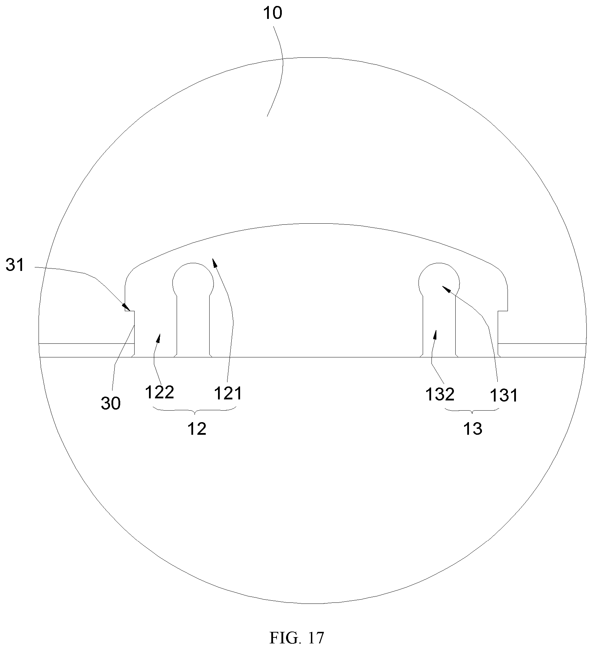

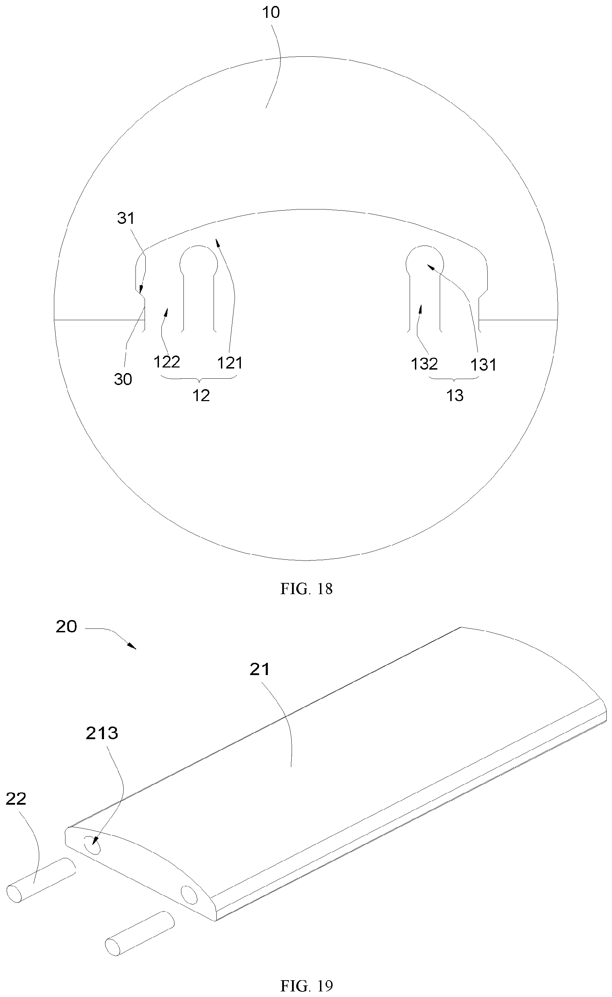

In an embodiment, as shown in FIGs. 17 and 18, the first snapping groove 12 includes a first snapping groove 121 and a first sliding groove 122. The first assembling groove 121 is in communication with the first sliding groove 122. Along the second preset direction, a cross-sectional area of the first sliding groove 122 is less than that of the first assembling groove 121. An end of the supporting member 21 is snapped into the first assembling groove 121 via the first sliding groove 122.

The shape of the supporting member 21 matches with a shape of the first assembling groove 121, by such arrangement, when the end of the support member 21 extends into the first assembling groove 121, a contact area between the supporting member 21 and the first assembling groove 121 can increase, thereby improving connection stability between the supporting member 21 and the first assembling groove 121. Furthermore, the cross-sectional area of the first sliding groove 122 is less than that of the first assembling groove 121, such that the supporting member 21 can be stopped by the first sliding groove 122 along the height direction of the sliding block 10, so as to prevent the supporting member 21 from being separated from the first assembling groove 121, and the supporting member 21 is more firmly mounted in the first snapping groove 121.

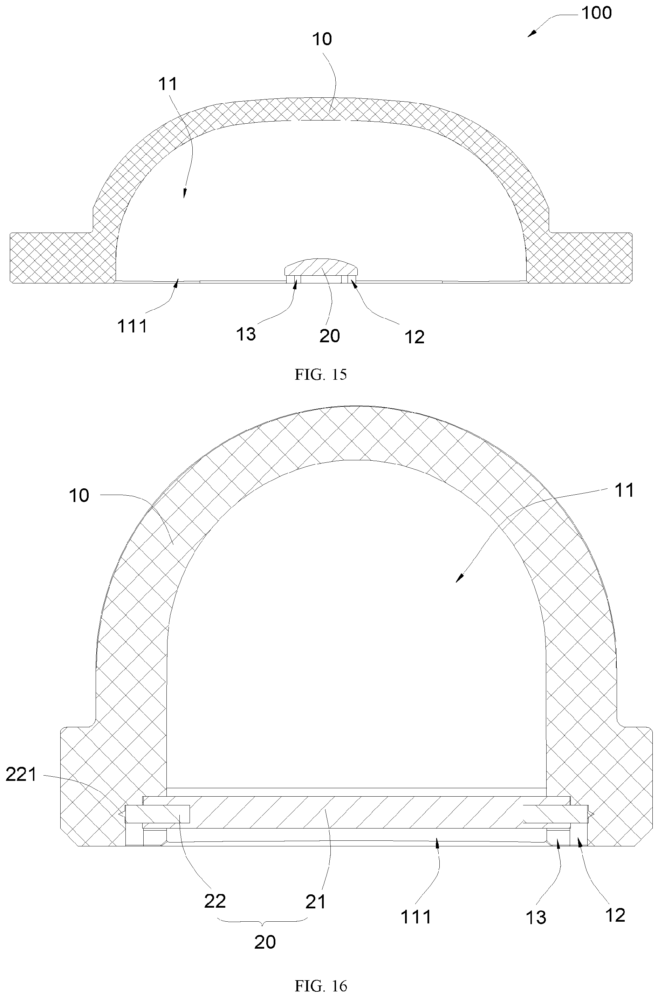

In an embodiment, as shown in FIGs. 15, 17 and 18, the second snapping groove 13 includes a second assembling groove 131 and a second sliding groove 132. The second assembling groove 131 is in communication with the second sliding groove 132. Along the second preset direction, a cross-sectional area of the second sliding groove 132 is less than that of the second assembling groove 131, and the restricting column 22 is snapped into the second assembling groove 131 via the second sliding groove 132.

A shape of the restricting column 22 matches with a shape of the second assembling groove 131, by such arrangement, when the restricting column 22 extends into the second assembling groove 131, a contact area between the restricting column 22 and the second assembling groove 131 can increase, thereby improving connection stability between the restricting column 22 and the second assembling groove 131. Furthermore, the cross-sectional area of the second sliding groove 132 is less than that of the second assembling groove 131, the restricting column 22 can be stopped by the second sliding groove 132 along the height direction of the sliding block 10, so as to prevent the restricting column 22 from being separated from the second assembling groove 131.

Furthermore, in an embodiment, the restricting column 22 is in interference fit with the second assembling groove 131, thereby further improving the connection strength between the restricting column 22 and the second assembling groove 131.

Furthermore, in an embodiment, the supporting member 21 is in interference fit with the first assembling groove 121, thereby further improving connection strength between the supporting member 21 and the first assembling groove 121.

In an embodiment, a side of the first assembling groove 121 adjacent to the first sliding groove 122 is provided with two restricting protrusions 30 disposed opposite to each other. The two restricting protrusion 30 is stopped by the supporting member 21 to prevent the supporting member 21 from being separated from the first assembling groove 121.

Along the second preset direction, the cross-sectional area of the restricting surface increases. Alternatively, the restricting protrusion 30 is provided with a restricting surface 31. An angle is defined between the restricting surface 31 and a side wall surface of the first sliding groove 122.

In another embodiment, as shown in FIG. 7, an acute angle is defined between the restricting surface 31 and the side wall surface of the second sliding groove 132, i.e., one end of the restricting surface 31 is stopped at the supporting member 21, and a distance between an other end of the restricting surface 31 and the supporting member 21 increases to form a gap. By such arrangement, the restricting surface 31 can play a stopping role for the supporting member 21, and wear between the restricting surface 31 and the supporting member 21 can be reduced, thereby prolonging the service life of the sliding block assembly 100.

In an embodiment, the restricting surface 31 may be flat or curved. By such arrangement, a structure of the restricting surface 3 is simple and is convenient for processing and molding.

In an embodiment, as shown in FIGs. 14 and 19, two restricting columns 22 disposed at two opposite ends of the supporting member 21 are defined as a column group, the number of the column group is multiple, and a plurality of column groups are spaced from each other and disposed on the supporting member 21. Two first snapping grooves disposed at two opposite ends of the circulation cavity are defined as a groove group, and the number of the groove group is the same as the number of the column group.

By such arrangement, the plurality of column groups corresponds to the plurality of groove groups, respectively, such that the connection strength between the supporting member 21 and the sliding block 10 can be further improved.

In some embodiments, an arrangement direction of each of the plurality of column groups is a width direction of the supporting member 21, i.e., the length direction of the sliding block 10. Furthermore, both the number of the column group and the number of the groove group are two, so as to reduce processing difficulty and effectively ensure connection strength of the sliding block assembly 100. Alternatively, each of the number of the column group and the number of the groove group may be three, four or more, which may not be limited herein.

In an embodiment, the restricting column 22 is in a cylindrical shape or a polygonal shape. By such arrangement, a structure of the restricting column 22 is simple and convenient for processing and molding, facilitating improving processing efficiency of the restricting column 22.

Furthermore, in an embodiment, as shown in FIG. 5, FIG. 9, and FIG. 10, an end of the restricting column 22 away from the supporting member 21 is provided with a protrusion portion 221. The protrusion portion 221 abuts against the groove wall of the second snapping groove 13 along with the supporting member 21 being snapped into the first snapping groove 121.

That is, when the restricting column 22 is mounted in the second snapping groove 13, a part of or whole protrusion portion 221 can be embedded into the groove wall of the second snapping groove 13, so as to greatly improve connection strength between the restricting column 22 and the sliding block 10.

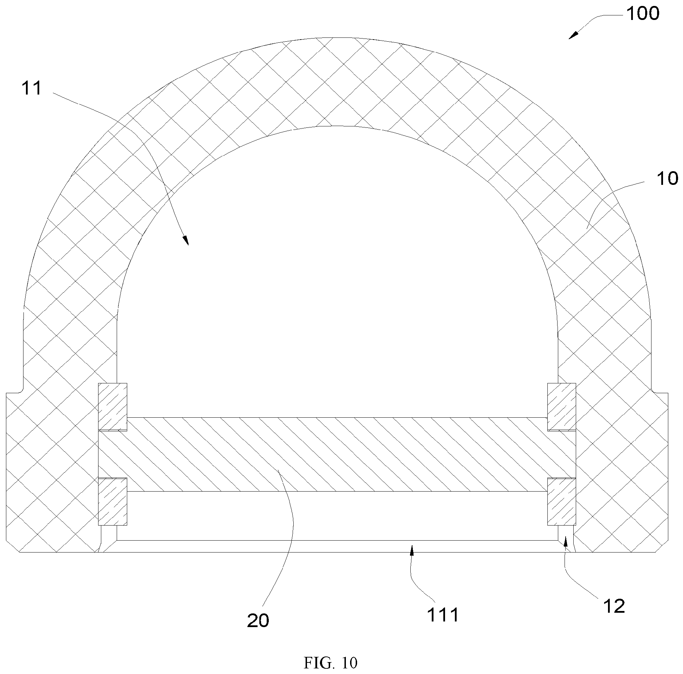

Furthermore, in an embodiment, as shown in FIGs. 9 and 10, the protrusion portion 221 is in a conical shape or a hemispherical shape. In some embodiments, the protrusion portion can be in the conical shape, such that the protrusion portion can be more easily embedded into the groove wall of the second snapping groove 13 to improve the connection performance between the restricting column 22 and the sliding block 10. In addition, the conical shape and the hemispherical shape of the protrusion portion 221 are simple and easy to process, so as to improve the processing efficiency of the protrusion portion 221.

Alternatively, in other embodiments, the protrusion portion 221 may be in a pyramid shape and other shapes, as long as the protrusion portion 221 can be in fit with the groove wall of the second snapping groove 12.

Furthermore, in an embodiment, the restricting column 22 is integrated with the protrusion portion 221, so as to improve connection strength between the restricting column 22 and the protrusion portion 221. In addition, the restricting column 22 and the protrusion portion 221 may be connected to each other in a welding or bonding manner, which is not limited herein.

In an embodiment, as shown in FIG. 19, the supporting member 21 is provided with an assembling hole 213, one end of the restricting column 22 is inserted into the assembling hole 213 and fixed to the assembly hole 213, and an other end of the restricting column protrudes from an end surface of the supporting member 21.

It is difficult to directly and integrally process the restricting column 22 at the end of the supporting member 21, and the processing difficulty can be greatly reduced by means of separate arrangement and fixed connection. In addition, appropriate materials may be selected as required to process the supporting member 21 and the restricting column 22, thereby reducing costs of the sliding block assembly 100.

A shape of the assembly hole 213 matches with the shape of the restricting column 22. The restricting column 22 may be fixed to the assembling hole 213 in the welding manner or a bonding manner. Alternatively, the restricting column 22 may be detachably connected to the assembling hole 213 in a snapping manner and so on.

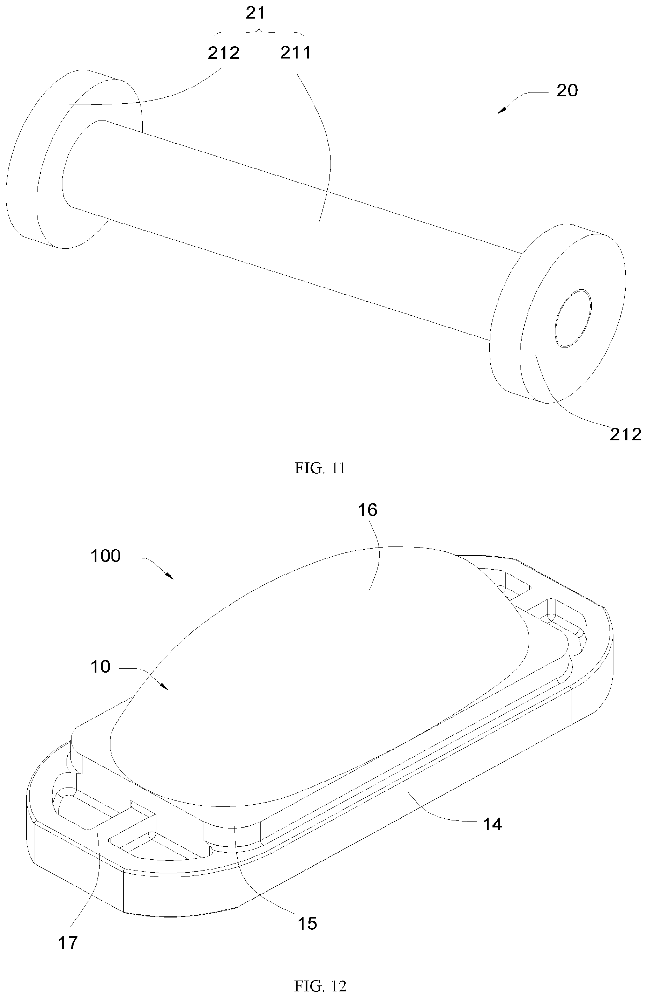

In an embodiment, as shown in FIG. 12, the sliding block 10 includes a base 14, a step portion 15, and a body portion 16 that are sequentially connected to each other in the height direction of the sliding block 10. The opening 111 is disposed on the base 14 of the sliding block 10.

The base 14 is connected to the body portion 16 by the step portion 15, and an area of the step portion 15 is greater than that of the body portion 16, so as to increase connection area between the body portion 16 and the base 14, resulting in effectively improving the structural strength of the sliding block 10. Moreover, the step portion 15 is convenient to be in fit with a guide frame (not shown) in the reversing valve. The sliding block 10 can be connected to the guide frame more stable, such that the guide frame can more easily push the sliding block 10 to move.

Furthermore, in an embodiment, one side of the base 14 is disposed towards the opening 111, and two ends of the base 14 along the width direction of the sliding block 10 are provided with two cutting surfaces 141, respectively. The two cutting surfaces 141 can play a role of avoiding interference for the sliding block 10, so as to reduce motion resistance of the sliding block 10.

The valve base is provided with a valve base (not shown) to be in fit with the sliding block 10. The valve base is fixed on the valve body. In order to ensure smooth operation of the sliding block 10, a width of the sliding block 10 is less than that of the valve base. When the valve base is welded with the valve body, a joint between the valve base and the valve body is provided with a solder, therefore, by the cutting surface 141 disposed on the sliding block 10, interference between the sliding block 10 and the valve body or solder can be better avoided, and a response speed of the sliding block 10 is faster, thereby greatly improving the reversing speed of the reversing valve.

Furthermore, in an embodiment, a side of the base 14 away from the opening 111 is provided with a reinforcing structure 17. The reinforcing structure 17 is connected to both the base 14 and the step portion 15, such that structural strength of the base 14 can be greatly enhanced, and the base 14 is prevented from being deformed when the sliding block 10 is in operation.

An outer peripheral side of the reinforcing structure 17 is flush with a peripheral side of the base 14, such that the sliding block 10 is more aesthetic as a whole.

In an embodiment, the base 14, the step portion 15, the body portion 16 and the reinforcing structure 17 are integrally formed, such that strength of the sliding block 10 can be greatly improved.

The present disclosure further provides a reversing valve including the sliding block assembly 100 described in any one of the above embodiments.

The various technical features of the above embodiments can be combined in any way. In order to make the description concise, not all possible combinations of the various technical features in the above embodiments have been described. However, as long as there is no contradiction in the combination of these technical features, they should be considered within the scope of the specification

The above embodiments only express several embodiments of the present disclosure, and their descriptions are more specific and detailed, but should not be understood as limiting the scope of the disclosure. It should be pointed out that for ordinary skill in the art, several modifications and improvements can be made without departing from the concept of the disclosure, which are within the scope of protection of the disclosure. Therefore, the scope of protection of the present disclosure should be based on the attached claims.

## Claims

1. A sliding block assembly, comprising a sliding block, a supporting structure and a restricting protrusion, wherein the sliding block is provided with a circulation cavity, an end of the circulation cavity is provided with an opening, and a part of an inner wall of the circulation cavity is recessed along a width direction of the sliding block to form a first snapping groove at the opening; the restricting protrusion is connected to an end of an assembly groove adjacent to the opening, and the restricting protrusion extends along a length direction of the sliding block and surrounds with a groove wall of the assembly groove to form a restricting groove; and the supporting structure comprises a supporting member, and the supporting member extends into the circulation cavity via the opening, a side surface of the supporting member is configured to be in stopping engagement with the restricting protrusion, such that an end of the supporting member is snapped into the restricting groove to prevent the supporting member from moving linearly along a height direction of the sliding block or rotating relative to the length direction of the sliding block.

2. The sliding block assembly of claim 1, wherein an end of the restricting protrusion away from the opening is provided with a restricting surface configured to be in stopping engagement with the supporting member; and the restricting surface is perpendicular to the height direction of the sliding block.

3. The sliding block assembly of claim 2, wherein a cross-sectional view of the restricting surface is in a straight-line shape, an arc shape, or a broken-line shape.

4. The sliding block assembly of claim 3, wherein a side surface of the supporting member is in contact with the restricting surface.

5. The sliding block assembly of claim 2, wherein the number of the restricting protrusion is multiple, and a plurality of restricting protrusions are disposed in the assembly groove at intervals; and restricting surfaces of the plurality of restricting protrusions are in flush with each other.

6. The sliding block assembly of claim 1, wherein two ends of the restricting protrusion extend to the groove wall of the assembly groove along the length direction of the sliding block and are connected to the groove wall of the assembly groove.

7. The sliding block assembly of claim 1, wherein a portion of a groove wall of the assembly groove away from the opening is recessed along the width direction of the sliding block to form the restricting groove; and the restricting protrusion is formed by a portion of the groove wall of the assembly groove adjacent to the opening.

8. The sliding block assembly of claim 1, wherein an end of the restricting protrusion adjacent to the opening is provided with a guiding surface.

9. The sliding block assembly of claim 1, wherein a shape of the supporting member matches with a shape of the restricting groove, and the supporting member is in interference fit with the restricting groove; or the supporting member comprises a supporting column and an adapter plate, an end of the supporting column is connected to the adapter plate, and the adapter plate is accommodated in the restricting groove and is in interference fit with the restricting groove.

10. The sliding block assembly of claim 1, wherein the supporting structure further comprises a restricting column, both ends of the circulation cavity are provided with a second snapping groove extending along a second preset direction, the both ends of the circulation cavity are opposite to each other along the first preset direction, and the second snapping groove is in communication with the circulation cavity via the first snapping groove;
and the number of the restricting column is the same as that of the second snapping groove, and the restricting column is disposed on both ends of the supporting member;
along the second preset direction, the both ends of the supporting member is configured to be snapped into the corresponding first snapping groove via the opening, respectively, and the restricting column is configured be snapped into the corresponding second snapping groove via the opening, respectively;
after the restricting column is snapped with the second snapping groove, an end of the restricting column away from the supporting member is configured to abut against a groove wall of the second snapping groove along the first preset direction; and an angle is defined between the first preset direction and the second preset direction.

11. The sliding block assembly of claim 10, wherein the second snapping groove comprises a second assembling groove and a second sliding groove, and the second assembling groove is in communication with the second sliding groove; and along the second preset direction, a cross-sectional area of the second sliding groove is less than that of the second assembling groove, and the restricting column is snapped into the first assembling groove via the second sliding groove.

12. The sliding block assembly of claim 10, wherein an end of the restricting column away from the supporting member is provided with a protrusion portion, and the protrusion portion is configured to abut against the groove wall of the second snapping groove in the first preset direction along with the supporting member being snapped into the first snapping groove.

13. The sliding block assembly of claim 12, wherein the protrusion portion is in a conical shape or a hemispherical shape.

14. The sliding block assembly of claim 1, wherein two restricting columns disposed at two opposite ends of the supporting member are defined as a column group, the number of the column group is multiple, and a plurality of column groups are spaced from each other and disposed on the supporting member; and two first snapping grooves disposed at two opposite ends of the circulation cavity are defined as a groove group, and the number of the groove group is the same as that of the column group.

15. The sliding block assembly of claim 1, wherein the supporting member is provided with an assembling hole, an end of the restricting column is inserted into the assembling hole and fixed to the assembling hole, and an another end of the restricting column protrudes from an end surface of the supporting member.

16. The sliding block assembly of claim 1, wherein the first snapping groove comprises a first assembling groove and a first sliding groove, and the first assembling groove is in communication with the first sliding groove; and along the second preset direction, a cross-sectional area of the first sliding groove is less than that of the first assembling groove, and an end of the supporting member is snapped into the first assembling groove via the first sliding groove.

17. The sliding block assembly of claim 16, wherein a cross-sectional area of the restricting protrusion increases along the second preset direction; or the restricting protrusion comprises a restricting surface forming an angle with a side wall surface of the first sliding groove;
and/or the restricting surface is flat or curved.

18. The sliding block assembly of claim 1, wherein the restricting column is in a cylindrical shape or a polygonal shape.

19. A reversing valve, comprising a sliding block assembly of any one of claims 1 to 18.
